# EUROPÄISCHE PATENTSCHRIFT

(11) **EP 3 272 468 B1**
(45) Veröffentlichungstag und Bekanntmachung des Hinweises auf die Patenterteilung: **11.11.2020**
(21) Anmeldenummer: 17175405.4
(22) Anmeldetag: 12.06.2017
(51) Int. Cl.: B25J 9/16

(54) **VERFAHREN UND VORRICHTUNG ZUM STEUERN EINER ROBOTERBEWEGUNG EINES ROBOTERS ANHAND EINER ZWEITEN TRAJEKTORIE**
METHOD AND DEVICE FOR CONTROLLING A ROBOTIC MOTION OF A ROBOT USING A SECOND TRAJECTORY
PROCÉDÉ ET DISPOSITIF DE COMMANDE D'UN MOUVEMENT D'UN ROBOT À L'AIDE D'UNE SECONDE TRAJECTOIRE

(30) Priorität: 14.07.2016 DE 102016212911
(43) Veröffentlichungstag der Anmeldung: 24.01.2018
(73) Patentinhaber: Siemens Aktiengesellschaft, 80333 München (DE)
(72) Erfinder: Mayer, Hermann Georg, 83209 Prien am Chiemsee (DE)

(56) Entgegenhaltungen:
- EP-A2- 2 859 999
- DE-A1-102008 016 604

## Beschreibung

Die Erfindung bezieht sich auf ein Verfahren und eine Vorrichtung zum Steuern einer Roboterbewegung eines Roboters anhand einer zweiten Trajektorie.

Es besteht ein Bedarf eine Trajektorie im dreidimensionalen Raum für ein technisches Gerät (z. B. einen Roboter) zu finden. Die abzufahrende Bahn (Trajektorie) soll dabei möglichst kurz sein und zu keinerlei Kollisionen des technischen Geräts mit seiner Umgebung führen. Neben der reinen geometrischen Bewegung sollen durch die Trajektorie weitere Vorgaben für das Abfahren der Bahn gemacht werden. So darf zu keiner Zeit der zulässige Geschwindigkeitsbereich des technischen Geräts verlassen werden. Im Fall von Robotern bedeutet dies, dass bei einer Bewegung des Endeffektors (z.B. einer Schweißzange) auch die Geschwindigkeit der einzelnen Gelenke unter einer technisch vorgegebenen Maximalgeschwindigkeit liegen muss. Insbesondere müssen Singularitäten in der Roboterstellung vermieden werden und Bereiche in der Nähe einer Singularität entsprechend langsam durchfahren werden. Da in Zukunft Roboter in flexiblen Umgebungen eingesetzt werden (z.B. Industrie 4.0 Szenarien) und auch die zu bearbeitenden Aufgaben variieren können (individualisierte Produktion), ist es zunehmend schwierig, Trajektorien "manuell" auf ihre Durchführbarkeit zu prüfen.

Aus dem Stand der Technik ist die Patentanmeldung EP 2 859 999 A2 bekannt, welche ein konventionelles Speichermedium sowie eine Methode zur Kontrolle einer Roboterbewegung offenbart.

Aus dem Stand der Technik ist die Patentanmeldung DE 10 2008 016604 A1 bekannt, welche ein konventionelles Verfahren und eine konventionelle Vorrichtung zur Eigenkollisionsüberwachung eines Manipulators offenbart.

Eine Aufgabe der vorliegenden Erfindung ist es, ein Verfahren und eine Vorrichtung bereitzustellen, die es erlauben, eine Roboterbewegung eines Roboters anhand einer zweiten Trajektorie zu steuern, wobei die zweite Trajektorie möglichst einfach berechenbar ist.

Die Aufgabe wird durch die in den unabhängigen Ansprüchen angegebenen Merkmale gelöst. In den Unteransprüchen sind vorteilhafte Weiterbildungen der Erfindung dargestellt.

Gemäß einem ersten Aspekt betrifft die Erfindung ein Verfahren zum Steuern einer Roboterbewegung eines Roboters anhand einer zweiten Trajektorie mit folgenden Verfahrensschritten:
a) Berechnen eines Viskositätsvolumenmodells zur Modellierung einer ersten Arbeitsumgebung des Roboters, wobei
   - das Viskositätsvolumenmodell erste räumliche Bereiche mit ersten unterschiedlichen Viskositäten umfasst;
   - die ersten Bereiche anhand von ersten Charakteristiken des Roboters und der ersten Arbeitsumgebung bestimmt werden;
b) Festlegen einer ersten Trajektorie für den Roboter;
c) Anregen einer simulierten Flüssigkeit in dem Viskositätsvolumenmodell zur Bewegung entlang der ersten Trajektorie, wobei die angeregte Flüssigkeit eine Strömung aufweist;
d) Erfassen eines Flüssigkeitselementes in der angeregten Flüssigkeit an einen Anfang der ersten Trajektorie;
e) Erfassen eines zurückgelegten Pfades des Elements in der angeregten simulierten Flüssigkeit in dem Viskositätsvolumenmodell, wobei eine Strömungsrichtung der simulierten Flüssigkeit durch die ersten Bereiche bestimmt wird;
f) Speichern des zurückgelegten Pfades als die zweite Trajektorie;
g) Steuern der Roboterbewegung anhand der zweiten Trajektorie.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitaler Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) handeln. Auch kann unter einem Prozessor ein virtualisierter Prozessor oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, des Sicherheitsmoduls, oder anderer Aspekte und Teilaspekte der Erfindung implementiert.

Unter einer "Speichereinheit" kann im Zusammenhang mit der Erfindung beispielsweise ein Speicher in Form von Arbeitsspeicher (engl. Random-Access Memory, RAM) oder eine Festplatte verstanden werden.

Unter einer "Arbeitsumgebung", insbesondere eines Roboters, kann im Zusammenhang mit der Erfindung beispielsweise ein Bewegungsraum des Roboters und/oder ein Arbeitsraum des Roboters verstanden werden. Der Bewegungsraum beschreibt insbesondere einen Raum, der beispielsweise von bewegten Elementen des Roboters insbesondere inklusive des Endeffektors mit der Gesamtheit aller Achsbewegungen erreicht werden kann. Insbesondere berücksichtigt der Bewegungsraum beispielsweise eine spezielle Form des Endeffektors und/oder eines Handhabungsobjekts, die insbesondere mit diesen in der Arbeitsumgebung erreicht werden können.

Unter einer "ersten Arbeitsumgebung", kann im Zusammenhang mit der Erfindung beispielsweise eine vereinfachte Arbeitsumgebung, eine Simulation der realen oder zweiten Arbeitsumgebung oder ein reales Modell der zweiten Arbeitsumgebung oder der tatsächlichen Arbeitsumgebung des Roboters verstanden werden. Die erste Arbeitsumgebung kann insbesondere eine vereinfachte zweite Arbeitsumgebung sein, bei der beispielsweise zunächst bestimmte Hindernisse aus der (zweiten) Arbeitsumgebung entfernt werden. Insbesondere kann die erste Arbeitsumgebung aber auch der zweiten Arbeitsumgebung entsprechen, abhängig vom gewählten Szenario.

Unter einer "zweiten Arbeitsumgebung", kann im Zusammenhang mit der Erfindung beispielsweise eine tatsächliche oder reale Arbeitsumgebung des Roboters verstanden werden. Die zweite Arbeitsumgebung kann insbesondere ein Arbeitsort sein, in dem der Roboter betrieben werden soll.

Die zweite Arbeitsumgebung könnte sich insbesondere auch zur gleichen Zeit an einem anderen Ort befinden. So kann beispielsweise der Operateur in der ersten Arbeitsumgebung ein Gerät (z. B. einen Roboter oder den Endeffektor eines Roboters) führen, dessen Bewegungen beispielsweise auf ein vorzugsweise baugleiches Gerät (oder auch ein anderes Gerät zur Ausführung von Trajektorien) in der entfernt liegenden Umgebung (z. B. zweite Arbeitsumgebung) übertragen werden. Insbesondere müssen etwaige Hindernisse in der zweiten Umgebung dem Operateur nicht bekannt sein, d.h. er kann beispielsweise in der ersten Arbeitsumgebung eine erste Trajektorie ohne Detailwissen über die zweite Arbeitsumgebung aufzeichnen. Die zweite Trajektorie wird dann beispielsweise durch die in den Ansprüchen/Ausführungsbeispielen beschriebenen Verfahren beispielsweise an die zweite Arbeitsumgebung angepasst. Zum Beispiel, wäre die Steuerung eines Roboters beispielsweise im Weltall vom Boden aus (entfernte Arbeitsumgebung in Verbindung mit einem Zeitversatz: vorliegende Verhältnisse in der zweiten Arbeitsumgebung können beim Festlegen/Aufzeichnen der ersten Trajektorie noch nicht vollständig bekannt sein: z.B. Hindernis wird während des Zeitversatzes eingebracht)

Unter einem "Arbeitsraum", insbesondere eines Roboters, kann im Zusammenhang mit der Erfindung beispielsweise ein Raum verstanden werden, der insbesondere von den Schnittstellen und/oder Bewegungsachsen und/oder einem Endeffektor gebildet werden, indem man beispielsweise alle Hauptachsen in ihre jeweilige Maximal- und Minimalstellung verfährt. Insbesondere ist der Arbeitsraum unabhängig von spezieller Form des Endeffektors und/oder des Handhabungsobjekt definiert (oder diese Aspekte werden im Arbeitsraum nicht berücksichtigt). Vorzugsweise ist der Bewegungsraum mindestens so groß wie der Arbeitsraum, wobei der Bewegungsraum auch größer sein kann als der Arbeitsraum.

Unter einem "Viskositätsvolumenmodell" kann im Zusammenhang mit der Erfindung beispielsweise eine rechnergestützte oder numerische Modellierung der Arbeitsumgebung des Roboters als fluidgefüllter/flüssigkeitsgefüllter Raum verstanden werden. Dies kann beispielsweise als dreidimensionales Modell, das insbesondere mittels Punkten (beispielsweise Punktwolken), Polygonen (beispielsweise Polygonnetze) oder Voxeln (beispielsweise Voxelgitter) implementiert ist. Das dreidimensionale Modell kann beispielsweise Positionen und/oder Bewegungen im Viskositätsvolumenmodell über Koordinaten und (Richtungs-)Vektoren beschreiben, die insbesondere durch eine x-Achse, eine y-Achse und eine z-Achse, die in einem Ursprung orthogonal aufeinander stehen, definiert werden. Unter einem "Viskositätsvolumenmodell" kann im Zusammenhang mit der Erfindung beispielsweise auch ein inhomogenes Viskositätsvolumenmodell mit einem oder mehreren räumlichen Bereichen verstanden werden, die insbesondere jeweils unterschiedliche Viskositäten aufweisen. Die jeweiligen unterschiedlichen Bereiche können beispielsweise räumlich zusammenhängende Voxel des Viskositätsvolumenmodells sein.

Unter einem "anisotropen Viskositätsvolumenmodell" kann im Zusammenhang mit der Erfindung beispielsweise eine Erweiterung des Viskositätsvolumenmodells verstanden werden, wobei insbesondere die Viskositäten des Viskositätsvolumenmodells richtungsabhängig sind. Beispielsweise unterscheiden sich die jeweiligen Viskositäten der einen oder mehreren unterschiedlichen räumlichen Bereiche abhängig von einer Bewegungsrichtung oder einem Richtungsvektor in dem jeweiligen Bereich. Beispielsweise kann in einem Bereich bei einer Bewegung, insbesondere eines Roboters, eine erste Viskosität in x-Richtung wirken und eine zweite Viskosität bei einer Bewegung in y-Richtung wirken.

Unter einem "Modell", insbesondere einem Viskositätsvolumenmodell und dergleichen, kann im Zusammenhang mit der Erfindung beispielsweise eine Datenstruktur, insbesondere zur Aufnahme von Daten (beispielsweise Voxel und dergleichen) zur Modellierung der Arbeitsumgebung als fluidgefüllter Raum, verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren.

Unter einer "Trajektorie" kann im Zusammenhang mit der Erfindung beispielsweise eine Raumkurve oder ein Pfad, entlang dem sich ein Punkt oder ein Endeffektor eines Roboters bewegt, verstanden werden.

Unter einem "Abspielen einer Trajektorie" kann im Zusammenhang mit der Erfindung beispielsweise ein Abfahren der Trajektorie mit dem Roboter verstanden werden, wobei insbesondere ein Messsystem die zweiten Charakteristiken (z. B. Hindernisse und Kollisionen) erfasst.

Unter einem "Messsystem" kann im Zusammenhang mit der Erfindung beispielsweise System zum Erfassen der Arbeitsumgebung und/oder Hindernisse in der Arbeitsumgebung verstanden werden. Bei dem Messsystem kann es sich beispielsweise um ein 3D-Kamerasystem oder ein Laserscanner handeln.

Unter einem "Roboter" kann im Zusammenhang mit der Erfindung beispielsweise ein medizinischer Roboter oder ein Industrieroboter verstanden werden, dessen Bewegungen insbesondere durch die Denavit-Hartenberg-Konvention beschreibbar sind.

Unter "unendlicher" oder "annähernd unendlicher" Viskosität kann im Zusammenhang mit der Erfindung beispielsweise ein sehr hoher Wert verstanden werden, der insbesondere nur noch eine kaum wahrnehmbare Fließgeschwindigkeit zulässt. Eine unendliche/annähernd unendliche Viskosität kann beispielsweise bei einer Implementierung derart festgelegt werden, dass insbesondere ein Datenfeld, das die Viskosität speichert, auf den höchsten erlaubten Wert eines Datentyps (z. B. float, double, integer) des Datenfeldes gesetzt wird.

Unter "Konfigurationen", insbesondere eines Roboters, können im Zusammenhang mit der Erfindung beispielsweise mechanischen Eigenschaften des Roboters verstanden werden, die insbesondere die möglichen Bewegungen und Bewegungsgeschwindigkeiten angeben. Die Konfigurationen eines Roboters geben beispielsweise zulässige Geschwindigkeit für Mechaniken (z. B. Drehgelenke, Motoren usw.) des Roboters für bestimmte Punkte/Positionen in der Arbeitsumgebung des Roboters an. Hierdurch ergeben sich beispielsweise die in diesem Punkt/dieser Position maximal zulässige Geschwindigkeiten für den Roboter und/oder Drehgeschwindigkeiten der Gelenke des Roboters.

Unter "Charakteristiken", insbesondere einer Arbeitsumgebung und/oder eines Roboters, können im Zusammenhang mit der Erfindung beispielsweise räumliche Informationen über Hindernisse in der ersten/zweiten Arbeitsumgebung und/oder die mechanischen Eigenschaften und/oder Beschränkungen des Roboters verstanden werden. Charakteristiken umfassen insbesondere auch Informationen über mögliche Kollisionen des Roboters mit Hindernissen oder Singularitäten, die anhand der mechanischen Eigenschaften des Roboters ableitbar sind.

Unter "ersten Bereichen", insbesondere eines Viskositätsvolumenmodells, können im Zusammenhang mit der Erfindung beispielsweise räumliche Bereiche verstanden werden, die jeweils eine unterschiedliche Viskosität aufweisen können. Die ersten räumlichen Bereiche können beispielsweise durch Punkte oder Voxel im Viskositätsvolumenmodell dargestellt werden. Die ersten räumlichen Bereiche können beispielsweise auch aktualisiert oder erweitert werden. Hierzu kann beispielsweise für die ersten räumlichen Bereiche jeweils eine neue Viskosität eingestellt werden oder die ersten räumlichen Bereiche werden beispielsweise um zusätzliche räumliche Bereiche erweitert. Unter einer "Singularität" kann im Zusammenhang mit der Erfindung beispielsweise eine ungünstige Position der Achsen verstanden werden. Eine Singularität ist beispielsweise dadurch gekennzeichnet und erkennbar, dass insbesondere zwei Achsen des Roboters kollinear (fluchtend) sind. Eine typische Konfiguration mit Singularität ist beispielsweise die Überkopfstellung des Werkzeuges/Endeffektors eines sechsachsigen Roboters. Hier fluchten beispielsweise die erste Achse und die sechste Achse. Die Steuerung kann beispielsweise eine auszuführende Rotation um eine Senkrechte nicht eindeutig der ersten Achse oder der sechsten Achse zuordnen. Eine andere Konstellation ist beispielsweise beim Nulldurchgang der fünften Achse gegeben. Hier fluchten insbesondere die vierte Achse und die sechste Achse. Hier gibt es insbesondere unendlich viele Achsstellungen, die insbesondere zur gleichen Werkzeugstellung/Endeffektorstellung führen bzw. Bewegungsbahnen, bei denen beispielsweise mehrere Achsen mit unendlicher Geschwindigkeit gegeneinander bewegt werden müssten.

Vorzugsweise wird die Flüssigkeit derart durch die erste Trajektorie angeregt, dass keine Turbulenzen entstehen und es sich somit vorzugsweise bei der Strömung um eine laminare Strömung handelt.

Die erste Trajektorie des erfindungsgemäßen Verfahrens kann beispielsweise in der ersten Arbeitsumgebung und/oder in einer simulierten Arbeitsumgebung (beispielsweise anhand eines 3D Modells der ersten/zweiten Arbeitsumgebung) und/oder in der zweiten Arbeitsumgebung beispielsweise über ein Eingabegerät festgelegt werden.

Das Verfahren ist beispielsweise dahingehend vorteilhaft, um eine Trajektorie (zweite Trajektorie) im dreidimensionalen Raum für ein technisches Gerät (z.B. einen Roboter) zu finden. Insbesondere ist mit dem erfindungsgemäßen Verfahren die Trajektorie (abzufahrende Bahn) derart bestimmbar, dass diese vorzugsweise möglichst kurz ist und es vorzugsweise zu keinen Kollisionen des technischen Geräts/Endeffektors des technischen Gerätes mit/in seiner Arbeitsumgebung oder Hindernissen in der zweiten Arbeitsumgebung kommt. Insbesondere erlaubt das erfindungsgemäße Verfahren, dass beispielsweise zu keiner Zeit der zulässige Geschwindigkeitsbereich des technischen Geräts verlassen wird. Für Roboter wird beispielsweise sichergestellt, dass bei einer Bewegung des Endeffektors (z.B. einer Schweißzange) des Roboters entlang einer Trajektorie auch die Geschwindigkeit der einzelnen Gelenke des Roboters unter einer technisch vorgegebenen Maximalgeschwindigkeit liegt. Insbesondere werden mit dem erfindungsgemäßen Verfahren Singularitäten in der Roboterstellung (Stellung der Gelenke des Roboters) vermieden und Bereiche in der Nähe einer Singularität entsprechend langsam durchfahren. Dies wird durch das erfindungsgemäße Verfahren beispielsweise dadurch erreicht, dass insbesondere Bereiche mit Singularitäten eine annähernd unendlich hohe Viskosität zugewiesen wird und Bereichen in der Nähe von Singularitäten eine höhere Viskosität zugewiesen wird als Bereiche die weiter entfernt von Singularitäten sind.

Des Weiteren ist das Verfahren beispielsweise dahingehend vorteilhaft, um beim Abfahren einer Trajektorie mit einem Endeffektor Pausen zu vermeiden oder ein plötzliches Drehen des Endeffektors zu verhindern, da so insbesondere Kollisionen des vom Roboter gehaltenen Werkstücks verhindert werden. Das vorgestellte Verfahren ist insbesondere dahingehend vorteilhaft, um automatisiert eine Trajektorie zu erstellen, die insbesondere kollisionsfrei ist und/oder Singularitäten umfährt.

Bei einer ersten Ausführungsform des Verfahrens, umfasst das Verfahren einen zusätzlichen Verfahrensschritt zwischen den Verfahrensschritten b) und c):
b2) Aktualisieren des Viskositätsvolumenmodells anhand von zweiten Charakteristiken einer zweiten Arbeitsumgebung und des Roboters, wobei
- anhand eines Abspielens der ersten Trajektorie in der zweiten Arbeitsumgebung die zweiten Charakteristiken ermittelt werden,
- anhand der zweiten Charakteristiken die ersten Bereiche aktualisiert und/oder erweitert werden.

Bei einer weiteren Ausführungsform des Verfahrens werden die zweiten Charakteristiken anhand des Abspielens der ersten Trajektorie in der zweiten Arbeitsumgebung und einem Messsystem erfasst.

Insbesondere werden die zweiten Charakteristiken anhand des Abspielens der ersten Trajektorie in einer Simulation der zweiten Arbeitsumgebung und/oder einem Messsystem erfasst. Damit kann die zweite Trajektorie in der zweiten Arbeitsumgebung beispielsweise auf numerischem Wegeberechnet werden.

Das Verfahren ist beispielsweise dahingehend vorteilhaft, um Hindernisse und/oder Kollisionen in der zweiten Arbeitsumgebung des Roboters zu erkennen und dieser jeweils einen ersten Bereich mit einer entsprechenden Viskosität zuzuweisen oder einen ersten Bereich zu aktualisieren. Hierzu kann beispielsweise in den Roboter ein spezifischer Endeffektor eingesetzt werden, um insbesondere die Bewegung des Roboters nach zu verfolgen und zu messen. Hierzu kann beispielsweise über ein Eingabegerät die erste Trajektorie manuell durch einen Benutzer abgefahren werden. Der Benutzer umfährt dann beispielsweise Hindernisse in der Arbeitsumgebung des Roboters und dieses Ausweichen kann dann beispielsweise durch ein Messsystem erfasst werden, um die zweiten Charakteristiken zu ermitteln.

Bei einer weiteren Ausführungsform des Verfahrens verfügt ein Eingabegerät für das Festlegen oder Abspielen der ersten Trajektorie über eine Kraftrückkopplung, wobei mittels der Kraftrückkopplung die zweiten Charakteristiken erfasst werden.

Das Verfahren ist beispielsweise dahingehend vorteilhaft, um die Viskosität dem Benutzer mittels der Kraftrückkopplung anzuzeigen. Insbesondere kann bereits während der Eingabe der Benutzer um Hindernisse und Singularitäten herum geführt werden, sodass beispielsweise die zweiten Charakteristiken einfacher und/oder schneller und/oder genauer ermittelbar sind.

Bei einer weiteren Ausführungsform des Verfahrens umfassen die ersten Charakteristiken des Roboters und/oder die zweiten Charakteristiken des Roboters zulässige Geschwindigkeiten der Motoren und/oder zulässige Drehbereiche der Gelenke des Roboters.

Das Verfahren ist beispielsweise dahingehend vorteilhaft, um die Eigenschaften eines Roboters mit unterschiedlichen Viskositäten zu modellieren. Hiermit können beispielsweise eine Beweglichkeit des Roboters in seiner Arbeitsumgebung und die technischen Grenzen, die dieser Beweglichkeit unterworfen ist, modelliert werden.

Bei einer weiteren Ausführungsform des Verfahrens umfassen die ersten Charakteristiken und/oder die zweiten Charakteristiken der ersten Arbeitsumgebung und/oder der zweiten Arbeitsumgebung Eigenschaften von Hindernissen, wobei die Eigenschaften von Hindernissen insbesondere eine Größe und/oder eine Länge und/oder eine Position in der ersten Arbeitsumgebung und/oder der zweiten Arbeitsumgebung umfassen.

Bei einer weiteren Ausführungsform des Verfahrens werden die ersten räumlichen Bereiche mit den ersten unterschiedlichen Viskositäten anhand einer zulässigen Geschwindigkeit des Roboters festgelegt, wobei die die zulässige Geschwindigkeit insbesondere von Konfigurationen des Roboters bestimmt wird.

Dazu werden beispielsweise zu den Positionen in den ersten Bereichen in der Arbeitsumgebung des Roboters im Viskositätsvolumenmodell (entsprechend einer gewählten räumlichen Auflösung) insbesondere die Konfigurationen des Roboters untersucht, durch die sich insbesondere für diese Positionen jeweils eine maximal zulässige Geschwindigkeit ergeben. Dies kann insbesondere anhand der ersten Charakteristiken durchgeführt werden. Gibt es beispielsweise für eine Position mehrere zulässige Konfigurationen (z.B. Lefty/Righty oder Ellbow Up/Down), so können diese beispielsweise entweder in einem Viskositätsvolumenmodell vereinigt werden, beispielsweise als eine maximal mögliche Geschwindigkeit über alle Konfigurationen oder es wird für jede Konfiguration ein eigenes Viskositätsvolumenmodell angelegt, um später mehrere Handlungsalternativen zu haben. Die maximal zulässige Geschwindigkeit wird beispielsweise über eine Formel in eine Viskosität an diesem Punkt umgerechnet Beispielsweise kann die Viskosität wie folgt bestimmt werden: Je geringer die Geschwindigkeit sein darf, desto höher ist die Viskosität und umgekehrt. Die Viskosität wird dabei insbesondere so gewählt, dass beispielsweise bei der Anregung der Flüssigkeit durch die erste Trajektorie keine Turbulenzen entstehen (vorzugsweise nur ein laminarer Fluss entsteht). Die sich vorzugsweise dadurch einstellende Geschwindigkeit der zweiten Trajektorien wird dann auf die Maximalgeschwindigkeit des Geräts hin kalibriert.

Bei einer weiteren Ausführungsform des Verfahrens bei mehreren Konfigurationen wird für jeweils einen der ersten räumlichen Bereiche jeweils ein Viskositätsvolumenmodel berechnet oder die mehreren Konfigurationen werden für den jeweiligen ersten räumlichen Bereich in dem Viskosevolumenmodell zusammengefasst.

Bei einer weiteren Ausführungsform des Verfahrens sind die ersten unterschiedlichen Viskositäten des Viskositätsvolumenmodells richtungsabhängig, wobei das Viskositätsvolumenmodell insbesondere ein anisotropes Viskositätsvolumenmodell ist.

Bei einer weiteren Ausführungsform des Verfahrens werden bei einer Veränderung der zweiten Charakteristiken während dem Abspielen der ersten Trajektorie und/oder bei einer Veränderung einer Position des Roboters in der zweiten Arbeitsumgebung während dem Abspielen der ersten Trajektorie nachfolgende Verfahrensschritte wiederholt:
- Aktualisieren des Viskositätsvolumenmodells;
- Anregen der simulierten Flüssigkeit;
- Erfassen des Flüssigkeitselementes;
- Erfassen von weiteren zurückgelegten Pfaden jeweils für eine Wiederholung,
   wobei der zurückgelegte Pfad und die weiteren zurückgelegten Pfade für die jeweilige Wiederholung die zweite Trajektorie aktualisieren

Das Verfahren ist beispielsweise dahingehend vorteilhaft, um eine Bewegung des Roboters oder der Hindernisse während des Abspielens der Trajektorie bei der Erstellung der zweiten Trajektorie zu berücksichtigen.

Bei einer weiteren Ausführungsform des Verfahrens wird das Wiederholen in kurzer zeitlicher Abfolge wiederholt.

Gemäß einem weiteren Aspekt betrifft die Erfindung eine Vorrichtung zur rechnergestützten Trajektorienberechnung für Roboter, aufweisend,
- ein erstes Berechnungsmodul zum Berechnen eines Viskositätsvolumenmodells zur Modellierung einer ersten Arbeitsumgebung des Roboters, wobei
   - das Viskositätsvolumenmodell erste räumliche Bereiche mit ersten unterschiedlichen Viskositäten umfasst;
   - die ersten Bereiche anhand von ersten Charakteristiken des Roboters und der ersten Arbeitsumgebung bestimmt werden;
- ein erstes Festlegemodul zum Festlegen einer ersten Trajektorie für die erste Arbeitsumgebung des Roboters;
- ein erstes Anregungsmodul zum Anregen einer simulierten Flüssigkeit in dem Viskositätsvolumenmodell zur Bewegung entlang der ersten Trajektorie, wobei die angeregte Flüssigkeit eine Strömung aufweist;
- ein erstes Erfassungsmodul zum Erfassen eines Flüssigkeitselementes in der angeregten Flüssigkeit an einem Anfang der ersten Trajektorie;
- ein zweites Erfassungsmodul zum Erfassen eines zurückgelegten Pfades des Elements in der angeregten simulierten Flüssigkeit in dem Viskositätsvolumenmodell, wobei eine Strömungsrichtung der simulierte Flüssigkeit durch die ersten Bereiche bestimmt wird;
- ein erstes Speichermodul zum Speichern des zurückgelegten Pfades als zweite Trajektorie;
- ein erstes Steuermodul zum Steuern der Roboterbewegung anhand der zweiten Trajektorie.

Bei einer ersten Ausführungsform der Vorrichtung umfasst die Vorrichtung mindestens ein weiteres Modul zur Durchführung des erfindungsgemäßen Verfahrens einer der Ausführungsformen.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker oder ein zur Erstellung von Prozessoren und/oder Geräten, beansprucht, wobei das Erstellungsgerät mit den Programmbefehlen derart konfiguriert wird, dass die genannte erfindungsgemäße Vorrichtung erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass dieses die erfindungsgemäße Vorrichtung erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein Ablaufdiagramm eines ersten Ausführungsbeispiels des erfindungsgemäßen Verfahrens;
- Fig. 2a-d: ein Ausführungsbeispiel des erfindungsgemäßen Verfahrens zum Steuern einer Roboterbewegung, wobei insbesondere Hindernisse und/oder Singularitäten berücksichtigt werden;
- Fig. 3: eine erfindungsgemäße Vorrichtung zum Steuern einer Roboterbewegung eines Roboters anhand einer zweiten Trajektorie;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinrichtung auf, um das Verfahren zu implementieren oder auszuführen.

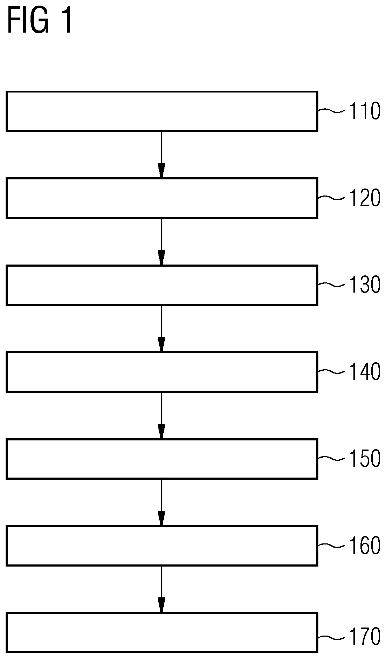

Die Fig. 1 zeigt ein Ablaufdiagramm eines ersten Ausführungsbeispiels des erfindungsgemäßen Verfahrens.

Im Einzelnen zeigt Fig. 1 ein Verfahren zum Steuern einer Roboterbewegung eines Roboters anhand einer zweiten Trajektorie.

Das Verfahren umfasst einen ersten Verfahrensschritt zum Berechnen 110 eines Viskositätsvolumenmodells zur Modellierung einer ersten Arbeitsumgebung des Roboters. Das Viskositätsvolumenmodell umfasst dabei erste räumliche Bereiche mit ersten unterschiedlichen Viskositäten, wobei die ersten Bereiche anhand von ersten Charakteristiken des Roboters und der ersten Arbeitsumgebung bestimmt werden.

Das Verfahren umfasst einen zweiten Verfahrensschritt zum Festlegen 120 einer ersten Trajektorie für den Roboter. Die erste Trajektorie kann beispielsweise in einer Speichereinheit oder einem Speichermodul gespeichert werden. Beispielsweise kann die erste Trajektorie für den Roboter mit einem Eingabegerät aufgenommen werden oder die erste Trajektorie kann durch eine Software(komponente) vorgegeben werden.

Das Verfahren umfasst vorzugsweise in einer Variante einen optionalen Verfahrensschritt zum Aktualisieren des Viskositätsvolumenmodells anhand von zweiten Charakteristiken einer zweiten Arbeitsumgebung und des Roboters, wobei anhand eines Abspielens der ersten Trajektorie in der zweiten Arbeitsumgebung die zweiten Charakteristiken ermittelt werden und anhand der zweiten Charakteristiken die ersten Bereiche aktualisiert und/oder erweitert werden. Das Abspielen der Trajektorie in der simulierten zweiten Arbeitsumgebung kann man sich als Umrühren einer Flüssigkeit vorstellen.

Das Verfahren umfasst einen dritten Verfahrensschritt zum Anregen 130 einer simulierten Flüssigkeit in dem Viskositätsvolumenmodell zur Bewegung entlang der ersten Trajektorie, wobei die angeregte Flüssigkeit eine Strömung aufweist, wobei die Strömung vorzugsweise eine laminare Strömung ist.

Das Verfahren umfasst einen vierten Verfahrensschritt zum Erfassen 140 eines Flüssigkeitselementes/eingebrachten Partikels in der angeregten Flüssigkeit an einem Anfang der ersten Trajektorie.

Das Verfahren umfasst einen fünften Verfahrensschritt zum Erfassen 150 eines zurückgelegten Pfades des Elements/Partikels in der angeregten simulierten Flüssigkeit in dem Viskositätsvolumenmodell, wobei eine Strömungsrichtung der simulierten Flüssigkeit durch die ersten Bereiche bestimmt wird.

Das Verfahren umfasst einen sechsten Verfahrensschritt zum Speichern 160 des zurückgelegten Pfades als zweite Trajektorie.

Das Verfahren umfasst einen siebten Verfahrensschritt zum Steuern 170 der Roboterbewegung anhand der zweiten Trajektorie.

Mit anderen Worten wird mittels des erfindungsgemäßen Verfahrens insbesondere zunächst die erste Arbeitsumgebung des Roboters als flüssigkeitsgefüllter Raum in Form des Viskositätsvolumenmodells modelliert und simuliert. Hierzu bestimmt man beispielsweise zunächst den Arbeitsraum des Roboters.

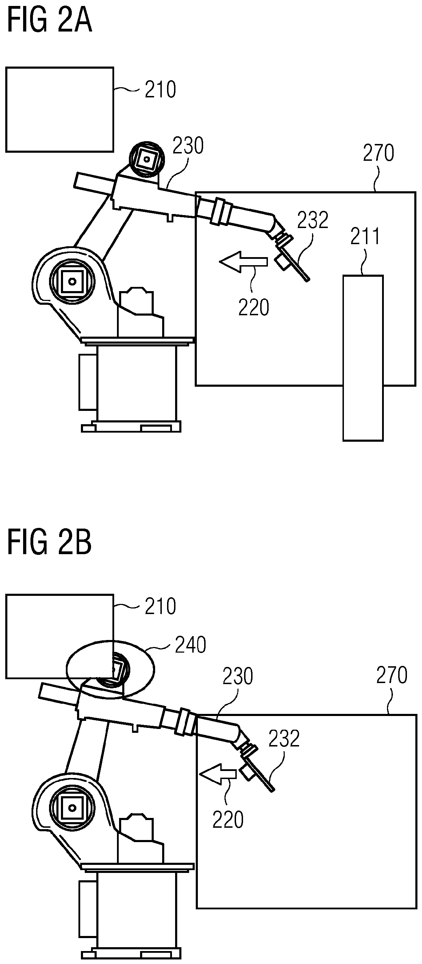

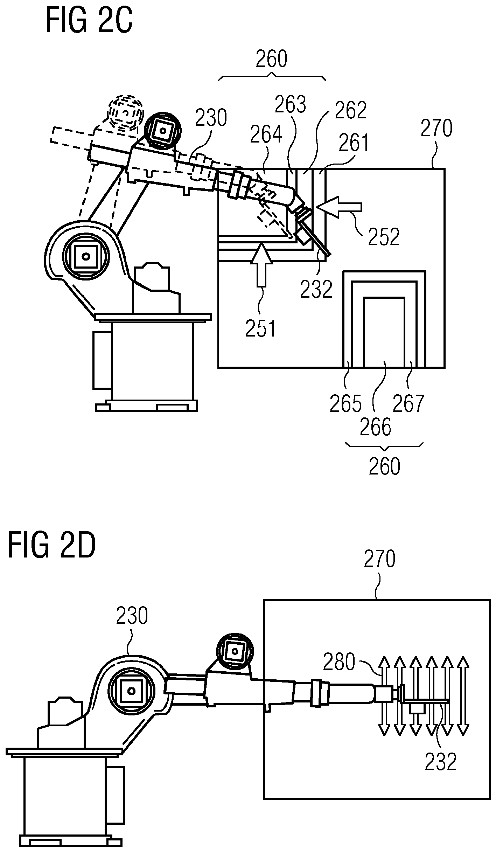

Hierzu kann man den Roboter beispielsweise in die erste Arbeitsumgebung stellen. Danach können die ersten Charakteristiken beispielsweise anhand mindestens eines der nachfolgenden drei Schritte (oder einer Kombination der drei Schritte) bestimmt werden und um anhand der ersten Charakteristiken das Viskositätsvolumenmodell zu berechnen, wobei beispielsweise die Fig. 2a-2d die entsprechenden Schritte zeigen.

Zunächst werden beispielsweise erste Hindernisse 211 (Fig. 2a), die sich in dem Arbeitsraum 270 bereits befinden, erfasst. Für die Positionen bzw. Bereiche der ersten Hindernisse 211 im Arbeitsraum werden beispielsweise entsprechende Positionen bzw. die entsprechenden Bereiche ebenfalls als die ersten Bereiche mit unterschiedlichen Viskositäten 260 modelliert. Für den äußeren ersten Bereich 265, der das erste Hindernis 211 umschließt, wird beispielsweise zunächst eine fünfte, relativ geringe, Viskosität 265 festgelegt. Danach wird der Bereich des ersten Hindernisses mit einer höheren sechsten Viskosität 267 umschlossen. Der Bereich des ersten Hindernisses 211 und/oder ein zusätzlicher frei gewählter Sicherheitsabstand werden dann beispielsweise auf unendlich hohe Viskosität (eine siebte Viskosität 266) gesetzt. Die unterschiedlichen Bereiche werden dann vorzugsweise als die ersten Bereiche mit den unterschiedlichen Viskositäten im Viskositätsvolumenmodell modelliert. Der Sicherheitsabstand kann beispielsweise als fließender Übergang zwischen der unendlichen Viskosität des Hindernisses und der umgebenden Viskosität modelliert werden.

Danach werden insbesondere mögliche Kollisionen 240 außerhalb des Arbeitsraums mit zweiten Hindernissen 210 ermittelt (Fig. 2a und Fig. 2b: z.B. Kollisionen der hinteren Robotergelenke), die beispielsweise bei einer geplanten Bewegung 220 des Roboters 230 mit dem Endeffektor 232 auftreten können. Diese werden ebenfalls als erste Bereiche mit unterschiedlichen Viskositäten 260 modelliert.

Dies wird beispielsweise in Fig. 2c gezeigt. Der Roboter bewegt sich beispielsweise nach links oben, was insbesondere durch einen ersten Richtungspfeil 251 und einem zweiten Richtungspfeil 252 angedeutet ist. Je näher sich der Roboter dem zweiten Hindernis 210 nähert umso höher wird die Viskosität, bis diese unendlich oder annähernd unendlich hoch ist und keine weitere Bewegung in Richtung des zweiten Hindernisses zulässt. Wie in Fig. 2c dargestellt ist, wirkt zunächst eine erste Viskosität 261, wenn der Roboter noch relativ weit von dem zweiten Hindernis 210 entfernt ist. Nähert sich der Roboter 230 dem zweiten Hindernis 210, umfasst ein näher an dem zweiten Hindernis 210 gelegener erster Bereich eine zweite höhere Viskosität 262. Nähert sich der Roboter 230 weiter dem zweiten Hindernis 210 an, so umfassen weitere erste Bereiche jeweils eine dritte (höhere) Viskosität 263 und eine vierte (noch höhere) Viskosität 264.

Es ist beispielsweise auch möglich, dass die ersten Bereiche für das erste Hindernis 211 und das zweite Hindernis 210 jeweils ohne eine ansteigende Viskosität modelliert werden. Dies kann insbesondere dadurch erreicht werden, dass die ersten Bereiche für das erste Hindernis 211 und das zweite Hindernis 210 jeweils auf eine unendlich hohe Viskosität gesetzt werden.

In einem nächsten Schritt modelliert man beispielsweise noch die Singularitäten beispielsweise mittels anisotropen Viskositäten. Hierdurch wird insbesondere erreicht, dass Bewegungen des Endeffektors 232 in Pfeilrichtung 280 noch möglich sind. Bewegungen senkrecht zur Pfeilrichtung 280 oder aus der Bildebene, erfordern eine sehr schnelle Bewegung der Gelenke des Roboters 230. Diese schnellen Bewegungen, insbesondere mit einer hohen Gelenk-Geschwindigkeit, können beispielsweise die mechanische Belastbarkeit von Komponenten des Roboters übersteigen. Die Begrenzung der Geschwindigkeit kann beispielsweise durch anisotrope Viskositäten in den ersten Bereichen modelliert werden. Mit anderen Worten bedeutet dies, dass vorzugsweise am selben Ort geringe Viskosität in Pfeilrichtung 280 herrscht, ansonsten eine sehr hohe Viskosität im Viskositätsvolumenmodell eingestellt ist.

Die einzelnen Schritte können beispielsweise jeweils als ein eigenes Viskositätsvolumenmodell berechnet werden und am Ende in einem Viskositätsvolumenmodell zusammengeführt werden. Alternativ ist es beispielsweise möglich, dass all diese Schritte an einem Viskositätsvolumenmodell berechnet werden, das für jeden Schritt das Viskositätsvolumenmodell aktualisiert.

Nachdem das Viskositätsvolumenmodell berechnet wurde, kann dieses beispielsweise anhand der zweiten Charakteristiken der zweiten Arbeitsumgebung aktualisiert werden. Hier kann beispielsweise die erste Trajektorie, die irgendwo aufgenommen wurde, beispielsweise an einem verkleinerten Modell oder in der ersten Arbeitsumgebung, auf die zweite Arbeitsumgebung, beispielsweise eine Fabrikhalle, übertragen. Es werden beispielsweise mittels eines Messsystems zusätzliche Hindernisse oder mögliche weiteren Singularitäten erfasst und im Viskositätsvolumenmodell modelliert. Hierzu können beispielsweise die ersten räumlichen Bereiche aktualisiert oder um weitere erste räumliche Bereiche ergänzt werden, für die insbesondere jeweils im Viskositätsvolumenmodell eine Viskosität eingestellt wird.

Um nun die zweite Trajektorie zu berechnen, wird beispielswiese die erste Trajektorie in das berechnete Viskositätsvolumenmodell gesetzt und es wird insbesondere eine Fluidsimulation (simulierte Flüssigkeit) gestartet. Die erste Trajektorie wird nun dazu genutzt, um die simulierte Flüssigkeit im Viskositätsvolumenmodell anzuregen ("umzurühren"). Bei diesem Prozess wird die Viskosität nicht beachtet, die Viskositäten sind hingegen insbesondere für die Bewegung der Flüssigkeit (Strömung), die sich nun einstellt (d.h. durch die Simulation berechnet wird), relevant.

Kurz nach dem Start der Anregung (Umrühren) wird ein Flüssigkeitselement erfasst/bzw. ein Partikel in die Strömung eingebracht. Das Flüssigkeitselement kann beispielsweise markiert werden oder es wird ein Flüssigkeitselement in Form eines Partikels verwendet, wobei der Partikel beispielsweise in die simulierte Flüssigkeit eingefügt wird. Die Erfassung des Flüssigkeitselements (bzw. dessen zurückgelegter Pfad) beginnt dort, wo die übertragene bzw. erste Trajektorie beginnt. Das Flüssigkeitselement bewegt sich nun aufgrund der Viskosität und der damit berechneten Fluidbewegung um Hindernisse herum (also im die ersten Bereiche mit einer hohen Viskosität) und vermeidet Singularitäten bzw. bewegt sich mit der gewünschten Geschwindigkeit. Die neue, kollisionsfreie Trajektorie (zweite Trajektorie), die das Flüssigkeitselement beschreibt wird nun auf den Roboter in der zweiten Arbeitsumgebung zu dessen Bewegungssteuerung übertragen.

Mit anderen Worten, können insbesondere mittels des Viskositätsvolumenmodells zunächst Hindernisse der ersten Arbeitsumgebung mittels der Viskositäten in den ersten räumlichen Bereichen des Viskositätsvolumenmodells modelliert werden, wobei die Viskosität(en) des Viskositätsvolumenmodells vorzugsweise räumlich variabel sind. Die Viskositäten des Viskositätsvolumenmodells können vorzugsweise bei einem Abfahren einer Trajektorie (erste Trajektorie oder zweite Trajektorie) direkt einem Benutzer zurückgegeben werden. Dies kann beispielsweise mittels eines Eingabegeräts erfolgen, das beispielsweise über eine haptische Kraftrückkopplung verfügt.

Mit diesen Eingabegeräten kann beispielsweise der Benutzer Kräfte spüren und es können unterschiedliche Viskositäten dargestellt werden. Zudem stellen diese Eingabegeräte vorzugsweise eine gute Möglichkeit dar, um Trajektorien auf einfache Art und Weise eingeben zu können. Ein entsprechendes Eingabegerät wird daher beispielsweise für das Festlegen der ersten Trajektorie und/oder das Abspielen der ersten Trajektorie verwendet.

Zusätzlich kann beispielsweise ein Messsystem verwendet werden um die zweiten Charakteristiken zu erfassen. Die zweiten Charakteristiken können beispielsweise für die zweite Arbeitsumgebung, insbesondere für Hindernisse in der zweiten Arbeitsumgebung, ermittelt werden. Bei dem Messsystem kann es sich beispielsweise um ein 3D-Kamerasystem oder einen Laserscanner handeln. Zusätzlich kann das Messsystem beispielsweise über Steuermodule verfügen um den Roboter anzusteuern, dass dieser eine Trajektorie abfährt. Vorzugsweise ist das Messsystem in der Lage vom Roboter Zustände, beispielsweise Konfigurationen und/oder Positionen, zu erfassen. Dies kann beispielsweise durch ein Auslesen von Konfigurationen und Laufzeitdaten des Roboters über eine Datenschnittstelle des Roboters erfolgen. Verknüpft werden diese Daten schließlich durch eine zentrale Recheneinheit, beispielsweise einem Prozessor, in dem Viskositätsvolumenmodell, das beispielsweise in einem Datenspeicher/Speichereinheit abgelegt ist, vorzugsweise in Form der ersten Bereiche und den unterschiedlichen Viskositäten.

Vorzugsweise kann das erfindungsgemäße Verfahren dazu verwendet werden, Trajektorien zu generieren, die sowohl kollisionsfrei sind als auch Singularitäten umgehen. Dazu kann beispielsweise in einer weiteren Variante in einem Vorverarbeitungsschritt zunächst eine Speichereinheit zur Aufnahme des Viskositätsvolumenmodells vorbereitet werden. Dazu werden vorzugsweise zu allen Positionen oder Punkten in der Arbeitsumgebung des Roboters im Viskositätsvolumenmodell (abhängig von der gewählten räumlichen Auflösung), die Konfigurationen des Roboters untersucht. Durch die untersuchten Konfigurationen ergeben sich beispielsweise die in diesem Punkt/dieser Position maximal zulässige Geschwindigkeiten für den Roboter, beispielsweise Drehgeschwindigkeiten der Gelenke des Roboters. Gibt es beispielsweise für einen Punkt/eine Position mehrere zulässige Konfigurationen (z. B. Lefty/Righty oder Ellbw Up/Down), so können diese beispielsweise in dem Viskositätsvolumenmodell vereinigt werden (z. B. maximal mögliche Geschwindigkeit über alle Konfigurationen) oder es wird für jede Konfiguration ein eigenes Viskositätsvolumenmodell angelegt, um insbesondere später mehrere Handlungsalternativen zu haben. Die maximal zulässige Geschwindigkeit wird nun beispielsweise über eine Formel in eine Viskosität an diesem Punkt/Position umgerechnet.

Im Falle einer Kollision (entweder des Endeffektors des Roboters oder der Gelenke des Roboters) wird die Viskosität auf unendlich oder annähernd unendlich gesetzt. Bei einer Implementierung als Softwarekomponente kann dies beispielsweise durch das Setzen eines Datentypen, beispielsweise eines Double-Wertes, auf den höchsten zulässigen Wert erreicht werden. Auf die gleiche Weise können beispielsweise Singularität modelliert werden.

In einer Variante kann beispielsweise eine anisotrope Viskosität verwendet werden. Mit dieser lassen sich insbesondere auch richtungsabhängige Geschwindigkeitsbeschränkungen modellieren. So kann beispielsweise ein Industrieroboter mit fast ausgestrecktem Arm nur noch sehr langsam in Streckrichtung fahren, da für diese Richtung in einem Bereich eine hohe Viskosität im Viskositätsvolumenmodell festgelegt wurde. Senkrechte Bewegungen können beispielsweise noch mit hoher Geschwindigkeit ausgeführt werden, da für diese Richtung in dem entsprechenden ersten Bereich eine geringe Viskosität festgelegt wurde. Entsprechende mathematische Simulationsmodelle für anisotrope Viskosität werden beispielsweise in der Geologie eingesetzt.

Die vorherrschende Viskosität zwischen den betrachteten Punkten/Positionen kann beispielsweise interpoliert werden. Dies gilt insbesondere nicht im allgemeinen Fall von Singularitäten. Singularitäten werden vorzugsweise vorab aus der Mechanik des Roboters bestimmt und die entsprechenden Punkte/Positionen explizit berechnet und insbesondere in den ersten Charakteristiken berücksichtigt, beispielsweise in ersten Charakteristiken gespeichert.

Sobald das Viskositätsvolumenmodell berechnet ist, kann beispielsweise die erste Trajektorie für den Roboter mit einem Eingabegerät aufgenommen werden oder die erste Trajektorie kann durch eine Software vorgegeben werden. Die Parameter der ersten Trajektorie, beispielsweise Positionen und Geschwindigkeiten, werden gespeichert (beispielsweise in der Speichereinheit) .

Die zweiten Charakteristiken werden beispielsweise durch ein Abspielen der Trajektorie in einer neuen Umgebung oder der tatsächlichen/zweiten Arbeitsumgebung des Roboters ermittelt. Dazu werden beispielsweise zunächst neue, mit dem Messsystem erkannte Hindernisse, in den zweiten Charakteristiken berücksichtigt. Mittels der zweiten Charakteristiken wird insbesondere das Viskositätsvolumenmodell aktualisiert.

In einer weiteren Variante können auch die Kollisionspunkte und Singularitäten aktualisiert werden (also erste Charakteristiken und/oder die zweiten Charakteristiken), falls sich in einem dynamischen Szenario der Roboter selbst bewegt hat, beispielsweise auf einer fahrbaren Plattform. Das Viskositätsvolumenmodell wird dann insbesondere anhand der ersten Charakteristiken und/oder der zweiten Charakteristiken aktualisiert.

Nach dem Aktualisieren wird nun durch die erste Trajektorie eine simulierte Flüssigkeit in dem Viskositätsvolumenmodell angeregt, wobei die Flüssigkeit nach dem Anregen eine Strömung aufweist - also in eine Richtung fließt. In geeignetem zeitlichem Abstand wird nun beispielsweise ein Element am Anfang der ersten Trajektorie in der Flüssigkeit erfasst. Hierzu kann beispielsweise ein Partikel in die angeregte simulierte Flüssigkeit eingefügt werden. Die Position des Elements wird verfolgt und als Bewegung des Endeffektors interpretiert. Während die Anregung der Flüssigkeit mittels der ersten Trajektorie theoretisch durch Hindernisse hindurch erfolgen kann (die Viskosität wird dabei nicht beachtet), folgt das Element vorzugsweise stets auf einer Bahn, die keine Kollisionen mit verbotenen Zonen (unendlich hohe Viskosität oder annähernd unendlich hohe Viskosität) aufweist und auch in der durch die Viskosität vorgegebenen Geschwindigkeit erfolgt. Die dazu erforderlichen Berechnungen werden beispielsweise durch die zugrunde liegende Fluidmechanik geleistet.

In einer weiteren bevorzugten Variante ist die Viskosität abhängig von einer Distanz zu einem Hindernis oder eine Singularität.

In einer weiteren bevorzugten Variante erhöht sich die jeweilige Viskosität, die durch ein Hindernis und/oder Singularität definiert wird, abhängig von einer Distanz zu dem Hindernis und/oder Singularität. Mit anderen Worten umfasst der jeweilige erste Bereich eine hohe Viskosität für eine Position nahe dem Hindernis und/oder Singularität und eine niedrigere Viskosität für eine Position, die weiter entfernt ist von dem Hindernis und/oder Singularität. Insbesondere kann die Viskosität schrittweise erhöht werden, je näher sich eine Position/Punkt an dem Hindernis und/oder Singularität befindet.

In einer weiteren bevorzugten Variante ist ein Prozessor speziell dazu eingerichtet, die Programmbefehle derart auszuführen, damit der Prozessor Funktionen ausführt, um das erfindungsgemäße Verfahren oder mindestens einen der Schritte des erfindungsgemäßen Verfahrens zu implementieren.

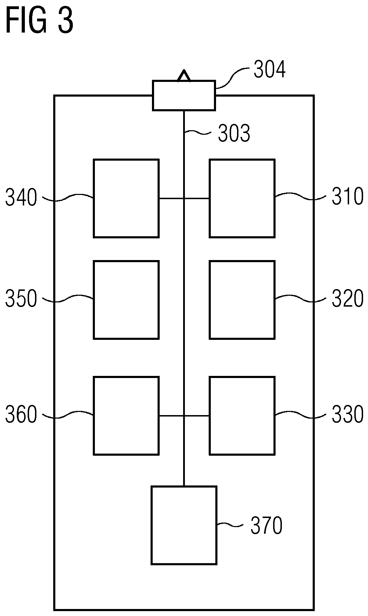

Die Fig. 3 zeigt eine erfindungsgemäße Vorrichtung zum Steuern einer Roboterbewegung eines Roboters anhand einer zweiten Trajektorie.

Im Einzelnen zeigt die Fig. 3 eine Vorrichtung zur rechnergestützten Trajektorienberechnung für Roboter. Die Vorrichtung umfasst ein erstes Berechnungsmodul 310, ein erstes Festlegemodul 320, ein optionales erstes Aktualisierungsmodul (nicht dargestellt), ein erstes Anregemodul 330, ein erstes Erfassungsmodul 340, ein zweites Erfassungsmodul 350, ein erstes Speichermodul 360, ein erstes Steuermodul 370 und eine optionale Kommunikationsschnittstelle 304, die über einen Bus 303 kommunikativ miteinander in Verbindung stehen.

Das erste Berechnungsmodul 310 ist dazu ausgelegt eines Viskositätsvolumenmodells zur Modellierung einer ersten Arbeitsumgebung des Roboters zu berechnen, wobei das Viskositätsvolumenmodell erste räumliche Bereiche mit ersten unterschiedlichen Viskositäten umfasst und die ersten Bereiche anhand von ersten Charakteristiken des Roboters und der ersten Arbeitsumgebung bestimmt werden.

Das erste Berechnungsmodul 310 kann beispielsweise mittels eines Prozessors und einer ersten Programmkomponente implementiert werden, die mittels Programmbefehlen das Viskositätsvolumenmodell berechnen.

Das erste Festlegemodul 320 ist zum Festlegen einer ersten Trajektorie für die erste Arbeitsumgebung des Roboters ausgelegt. Das Festlegemodul 320 kann beispielsweise ein Eingabegerät sein, so wie dies beispielsweise in der Fig. 1 beschrieben wurde.

Das erste Aktualisierungsmodul ist zum Aktualisieren des Viskositätsvolumenmodells anhand von zweiten Charakteristiken einer zweiten Arbeitsumgebung und des Roboters ausgelegt, wobei anhand eines Abspielens der ersten Trajektorie in der zweiten Arbeitsumgebung die zweiten Charakteristiken ermittelt werden. Anhand der zweiten Charakteristiken werden beim Aktualisieren die ersten Bereiche aktualisiert und/oder erweitert.

Das erste Aktualisierungsmodul kann beispielsweise mittels des Prozessors, einer zweiten Programmkomponente und dem in Fig. 1 erläuterten Messsystem implementiert werden, wobei mittels Programmbefehle und den ersten Charakteristiken und/oder zweiten Charakteristiken das Viskositätsvolumenmodell aktualisieren wird.

Das erste Anregemodul 330 ist zum Anregen einer simulierten Flüssigkeit in dem Viskositätsvolumenmodell zur Bewegung entlang der ersten Trajektorie ausgelegt, wobei die angeregte Flüssigkeit eine Strömung aufweist.

Das erste Anregemodul 330 kann beispielsweise mittels des Prozessors und einer dritten Programmkomponente implementiert werden, die mittels Programmbefehle das Anregen der simulierten Flüssigkeit berechnen.

Das erste Erfassungsmodul 340 ist zum Erfassen eines Flüssigkeitselementes in der angeregten Flüssigkeit an einem Anfang der ersten Trajektorie ausgelegt.

Das erste Erfassungsmodul 340 kann beispielsweise mittels des Prozessors und einer vierten Programmkomponente implementiert werden, die mittels Programmbefehle das Flüssigkeitselement derart markieren, dass dieses beachtet werden kann.

Das zweite Erfassungsmodul 350 ist zum Erfassen eines zurückgelegten Pfades des Elements in der angeregten simulierten Flüssigkeit in dem Viskositätsvolumenmodell ausgelegt, wobei eine Strömungsrichtung der simulierten Flüssigkeit durch die ersten Bereiche bestimmt wird.

Das zweite Erfassungsmodul 350 kann beispielsweise mittels des Prozessors und einer fünften Programmkomponente implementiert werden, die mittels Programmbefehle die Bewegung des Flüssigkeitselements in der simulierten Flüssigkeit verfolgen.

Das erste Speichermodul 360 ist zum Speichern des zurückgelegten Pfades als zweite Trajektorie ausgelegt. Das erste Speichermodul 360 kann beispielsweise als eine Festplatte, ein USB-Speicher oder eine SSD-Festplate sein.

Das erste Steuermodul 370 ist zum Steuern der Roboterbewegung anhand der zweiten Trajektorie ausgelegt.

Das erste Steuermodul 370 kann beispielsweise mittels des Prozessors und einer sechsten Programmkomponente implementiert werden, die mittels Programmbefehle die Roboterbewegung steuert.

Die Vorrichtung kann beispielsweise zusätzlich noch (mindestens eine) weitere Komponente/(n) umfassen, wie beispielsweise einen Prozessor, eine Speichereinheit, ein Eingabegerät, insbesondere eine Computertastatur oder eine Computermaus, und einen Monitor.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Verfahren zum Steuern einer Roboterbewegung eines Roboters (230) anhand einer zweiten Trajektorie mit folgenden Verfahrensschritten:
a) Berechnen (110) eines Viskositätsvolumenmodells zur Modellierung einer ersten Arbeitsumgebung (270) des Roboters, wobei
- das Viskositätsvolumenmodell erste räumliche Bereiche (260) mit ersten unterschiedlichen Viskositäten umfasst;
- die ersten Bereiche (260) anhand von ersten Charakteristiken des Roboters (230) und der ersten Arbeitsumgebung (270) bestimmt werden;
b) Festlegen (120) einer ersten Trajektorie für den Roboter(230);
c) Anregen (130) einer simulierten Flüssigkeit in dem Viskositätsvolumenmodell zur Bewegung entlang der ersten Trajektorie, wobei die angeregte Flüssigkeit eine Strömung aufweist;
d) Erfassen (140) eines Flüssigkeitselementes in der angeregten Flüssigkeit an einem Anfang der ersten Trajektorie;
e) Erfassen (150) eines zurückgelegten Pfades des Elements in der angeregten simulierten Flüssigkeit in dem Viskositätsvolumenmodell, wobei eine Strömungsrichtung der simulierten Flüssigkeit durch die ersten Bereiche bestimmt wird;
f) Speichern (160) des zurückgelegten Pfades als die zweite Trajektorie;
g) Steuern (170) der Roboterbewegung anhand der zweiten Trajektorie.

2. Verfahren nach Anspruch 1, wobei das Verfahren einen zusätzlichen Verfahrensschritt zwischen den Verfahrensschritten b) und c) umfasst:
b2) Aktualisieren (180) des Viskositätsvolumenmodells anhand
von zweiten Charakteristiken einer zweiten Arbeitsumgebung und des Roboters (230), wobei
- anhand eines Abspielens der ersten Trajektorie in der zweiten Arbeitsumgebung die zweiten Charakteristiken ermittelt werden,
- anhand der zweiten Charakteristiken die ersten Bereiche (260) aktualisiert und/oder erweitert werden.

3. Verfahren nach Anspruch 2, wobei die zweiten Charakteristiken anhand des Abspielens der ersten Trajektorie in der zweiten Arbeitsumgebung und einem Messsystem erfasst werden.

4. Verfahren nach einem der vorhergehenden Ansprüche, wobei ein Eingabegerät für das Festlegen oder Abspielen der ersten Trajektorie über eine Kraftrückkopplung verfügt, wobei mittels der Kraftrückkopplung die zweiten Charakteristiken erfasst werden.

5. Verfahren nach einem der vorhergehenden Ansprüche, wobei die ersten Charakteristiken des Roboters (230) und/oder die zweiten Charakteristiken des Roboters (230) zulässige Geschwindigkeiten der Motoren und/oder zulässige Drehbereiche der Gelenke des Roboters umfassen.

6. Verfahren nach einem der vorhergehenden Ansprüche, wobei die ersten Charakteristiken und/oder die zweiten Charakteristiken der ersten Arbeitsumgebung (270) und/oder der zweiten Arbeitsumgebung Eigenschaften von Hindernissen umfassen, wobei die Eigenschaften von Hindernissen insbesondere eine Größe und/oder eine Länge und/oder eine Position in der ersten Arbeitsumgebung (270) und/oder der zweiten Arbeitsumgebung umfassen.

7. Verfahren nach einem der vorhergehenden Ansprüche, wobei die ersten räumlichen Bereiche (260) mit den ersten unterschiedlichen Viskositäten anhand einer zulässigen Geschwindigkeit des Roboters festgelegt werden, wobei die die zulässige Geschwindigkeit insbesondere von Konfigurationen des Roboters bestimmt wird.

8. Verfahren nach Anspruch 7, wobei bei mehreren Konfigurationen für jeweils einen der ersten räumlichen Bereiche (260) jeweils ein Viskosevolumenmodell berechnet wird oder die mehreren Konfigurationen für den jeweiligen ersten räumlichen Bereich in dem Viskosevolumenmodell zusammengefasst werden.

9. Verfahren nach einem der vorhergehenden Ansprüche, wobei die ersten unterschiedlichen Viskositäten des Viskositätsvolumenmodells richtungsabhängig sind, wobei das Viskositätsvolumenmodell insbesondere ein anisotropes Viskositätsvolumenmodell ist.

10. Verfahren nach einem der vorhergehenden Ansprüche, insbesondere nach einem der Ansprüche 2 - 9, wobei bei einer Veränderung der zweiten Charakteristiken während dem Abspielen der ersten Trajektorie und/oder einer Position des Roboters (230) in der zweiten Arbeitsumgebung während dem Abspielen der ersten Trajektorie nachfolgende Verfahrensschritte wiederholt werden:
- Aktualisieren des Viskositätsvolumenmodells;
- Anregen der simulierten Flüssigkeit;
- Erfassen des Flüssigkeitselementes;
- Erfassen von weiteren zurückgelegten Pfaden jeweils für eine Wiederholung,
wobei der zurückgelegte Pfad und der weiteren zurückgelegten Pfade für die jeweilige Wiederholung als zweite Trajektorie zusammengefasst werden und gespeichert werden.

11. Verfahren nach Anspruch 10, wobei das Wiederholen in kurzer zeitlicher Abfolge wiederholt wird.

12. Vorrichtung zum Steuern einer Roboterbewegung eines Roboters (230) anhand einer zweiten Trajektorie, aufweisend,
- ein erstes Berechnungsmodul (310) zum Berechnen eines Viskositätsvolumenmodells zur Modellierung einer ersten Arbeitsumgebung (270) des Roboters (230), wobei
- das Viskositätsvolumenmodell erste räumliche Bereiche (260) mit ersten unterschiedlichen Viskositäten umfasst;
- die ersten Bereiche (260) anhand von ersten Charakteristiken des Roboters (230) und der ersten Arbeitsumgebung (270) bestimmt werden;
- ein erstes Festlegemodul (320) zum Festlegen einer ersten Trajektorie für den Roboter (230);
- ein erstes Anregungsmodul (330) zum Anregen einer simulierten Flüssigkeit in dem Viskositätsvolumenmodell zur Bewegung entlang der ersten Trajektorie, wobei die angeregte Flüssigkeit eine Strömung aufweist;
- ein erstes Erfassungsmodul (340) zum Erfassen eines Flüssigkeitselementes in der angeregten Flüssigkeit an einen Anfang der ersten Trajektorie;
- ein zweites Erfassungsmodul (350) zum Erfassen eines zurückgelegten Pfades des Elements in der angeregten simulierten Flüssigkeit in dem Viskositätsvolumenmodell, wobei eine Strömungsrichtung der simulierte Flüssigkeit durch die ersten Bereiche (260) bestimmt wird;
- ein erstes Speichermodul (360) zum Speichern des zurückgelegten Pfades als zweite Trajektorie;
- ein erstes Steuermodul (370) zum Steuern der Roboterbewegung anhand der zweiten Trajektorie.

13. Vorrichtung nach Anspruch 12, wobei die Vorrichtung mindestens ein weiteres Modul umfasst zur Durchführung des Verfahrens nach einem der Ansprüche 1 - 11.

14. Computerprogrammprodukt mit Programmbefehlen zur Durchführung des Verfahrens nach einem der Ansprüche 1 - 11.

15. Computerprogrammprodukt mit Programmbefehlen für ein Erstellungsgerät, das mittels der Programmbefehle konfiguriert wird, die Vorrichtung nach Anspruch 12 oder 13 zu erstellen.

## Claims

1. Method for controlling a robot movement of a robot (230) on the basis of a second trajectory, comprising the following method steps:
a) calculating (110) a viscosity volume model for modelling a first working environment (270) of the robot, wherein
- the viscosity volume model comprises first spatial regions (260) with first different viscosities;
- the first regions (260) are determined on the basis of first characteristics of the robot (230) and of the first working environment (270);
b) defining (120) a first trajectory for the robot (230);
c) exciting (130) a simulated liquid in the viscosity volume model to move along the first trajectory, wherein the excited liquid has a flow;
d) detecting (140) a liquid element in the excited liquid at a start of the first trajectory;
e) detecting (150) a covered path of the element in the excited simulated liquid in the viscosity volume model, wherein a flow direction of the simulated liquid through the first regions is determined;
f) storing (160) the covered path as the second trajectory;
g) controlling (170) the robot movement on the basis of the second trajectory.

2. Method according to Claim 1, wherein the method comprises an additional method step between method steps b) and c):
b2) updating (180) the viscosity volume model on the basis of second characteristics of a second working environment and of the robot (230), wherein
- the second characteristics are ascertained on the basis of playing back the first trajectory in the second working environment,
- the first regions (260) are updated and/or extended on the basis of the second characteristics.

3. Method according to Claim 2, wherein the second characteristics are detected on the basis of playing back the first trajectory in the second working environment and a measurement system.

4. Method according to one of the preceding claims, wherein an input device for defining or playing back the first trajectory has a force feedback means, wherein the second characteristics are detected by means of the force feedback means.

5. Method according to one of the preceding claims, wherein the first characteristics of the robot (230) and/or the second characteristics of the robot (230) comprise permissible speeds of the motors and/or permissible rotation ranges of the joints of the robot.

6. Method according to one of the preceding claims, wherein the first characteristics and/or the second characteristics of the first working environment (270) and/or of the second working environment comprise properties of obstacles, wherein the properties of obstacles comprise, in particular, a size and/or a length and/or a position in the first working environment (270) and/or the second working environment.

7. Method according to one of the preceding claims, wherein the first spatial regions (260) with the first different viscosities are defined on the basis of a permissible speed of the robot, wherein the permissible speed is determined, in particular, from configurations of the robot.

8. Method according to Claim 7, wherein, in the case of a plurality of configurations, in each case one viscosity volume model is calculated for in each case one of the first spatial regions (260), or the plurality of configurations are combined in the viscosity volume model for the respective first spatial region.

9. Method according to one of the preceding claims, wherein the first different viscosities of the viscosity volume model are direction-dependent, wherein the viscosity volume model is, in particular, an anisotropic viscosity volume model.

10. Method according to one of the preceding claims, in particular according to one of Claims 2-9, wherein, in the case of a change in the second characteristics during playback of the first trajectory and/or in a position of the robot (230) in the second working environment during playback of the first trajectory, the following method steps are repeated:
- updating the viscosity volume model;
- exciting the simulated liquid;
- detecting the liquid element;
- detecting further covered paths for one repetition in each case,
wherein the covered path and the further covered paths for the respective repetition are combined as a second trajectory and are stored.

11. Method according to Claim 10, wherein the repetition is repeated in quick succession.

12. Apparatus for controlling a robot movement of a robot (230) on the basis of a second trajectory, having
- a first calculation module (310) for calculating a viscosity volume model for modelling a first working environment (270) of the robot (230), wherein
- the viscosity volume model comprises first spatial regions (260) with first different viscosities;
- the first regions (260) are determined on the basis of first characteristics of the robot (230) and of the first working environment (270);
- a first definition module (320) for defining a first trajectory for the robot (230);
- a first excitation module (330) for exciting a simulated liquid in the viscosity volume model for moving along the first trajectory, wherein the excited liquid has a flow;
- a first detection module (340) for detecting a liquid element in the excited liquid at a start of the first trajectory;
- a second detection module (350) for detecting a covered path of the element in the excited simulated liquid in the viscosity volume model, wherein a flow direction of the simulated liquid through the first regions (260) is determined;
- a first memory module (360) for storing the covered path as a second trajectory;
- a first control module (370) for controlling the robot movement on the basis of the second trajectory.

13. Apparatus according to Claim 12, wherein the apparatus comprises at least one further module for carrying out the method according to one of Claims 1-11.

14. Computer program product having program commands for carrying out the method according to one of Claims 1-11.

15. Computer program product having program commands for a creation device which is configured by means of the program commands to create the apparatus according to Claim 12 or 13.

## Revendications

1. Procédé de commande d'un mouvement de robot d'un robot (230) à l'aide d'une seconde trajectoire, comportant les étapes suivantes :
a) calcul (110) d'un modèle de volume de viscosité pour la modélisation d'un premier environnement de travail (270) du robot,
le modèle de volume de viscosité comprenant des premières zones spatiales (260) avec des premières viscosités différentes ;
les premières zones (260) étant définies à l'aide de premières caractéristiques du robot (230) et du premier environnement de travail (270) ;
b) détermination (120) d'une première trajectoire pour le robot (230) ;
c) stimulation (130) d'un liquide simulé dans le modèle de volume de viscosité pour déplacement le long de la première trajectoire, le liquide stimulé présentant un courant ;
d) détection (140) d'un élément de liquide dans le liquide stimulé à un début de la première trajectoire ;
e) détection (150) d'un chemin parcouru de l'élément dans le liquide simulé stimulé dans le modèle de volume de viscosité, un sens du courant du liquide simulé étant déterminé par les premières zones ;
f) sauvegarde (160) du chemin parcouru en tant que deuxième trajectoire;
g) commande (170) du mouvement du robot à l'aide de la deuxième trajectoire.

2. Procédé selon la revendication 1, dans lequel le procédé comprend une étape supplémentaire entre les étapes de procédé b) et c) :
b2) mise à jour (180) du modèle de volume de viscosité à l'aide de deuxièmes caractéristiques d'un deuxième environnement de travail et du robot (230),
les deuxièmes caractéristiques étant déterminées à l'aide d'un déroulement de la première trajectoire dans le deuxième environnement de travail,
les premières zones (260) étant mises à jour et/ou élargies à l'aide des deuxièmes caractéristiques.

3. Procédé selon la revendication 2, dans lequel les deuxièmes caractéristiques sont détectées à l'aide du déroulement de la première trajectoire dans le deuxième environnement de travail et dans un système de mesure.

4. Procédé selon l'une des revendications précédentes, dans lequel un appareil de saisie pour la détermination ou le déroulement de la première trajectoire dispose d'un système de rétro-action, les deuxièmes caractéristiques étant détectées au moyen du système de rétro-action.

5. Procédé selon l'une des revendications précédentes, dans lequel les premières caractéristiques du robot (230) et/ou les deuxièmes caractéristiques du robot (230) comprennent des vitesses autorisées des moteurs et/ou des plages de rotation autorisées des articulations du robot.

6. Procédé selon l'une des revendications précédentes, dans lequel les premières caractéristiques et/ou les deuxièmes caractéristiques du premier environnement de travail (270) et/ou du deuxième environnement de travail comprennent des propriétés d'obstacles, les propriétés d'obstacles comprenant plus particulièrement une taille et/ou une longueur et/ou une position dans le premier environnement de travail (270) et/ou le deuxième environnement de travail.

7. Procédé selon l'une des revendications précédentes, dans lequel les premières zones spatiales (260) avec les premières viscosités différentes sont déterminées à l'aide d'une vitesse autorisée du robot, la vitesse autorisée étant déterminée plus particulièrement par des configurations du robot.

8. Procédé selon la revendication 7, dans lequel, étant donné plusieurs configurations, un modèle de volume de viscosité est calculé respectivement pour respectivement une des premières zones spatiales (260) ou les plusieurs configurations sont, pour la première zone spatiale respective, regroupées dans le modèle de volume de viscosité.

9. Procédé selon l'une des revendications précédentes, dans lequel les premières viscosités différentes du modèle de volume de viscosité sont dépendantes de la direction, le modèle de volume de viscosité étant plus particulièrement un modèle de volume de viscosité anisotrope.

10. Procédé selon l'une des revendications précédentes, et plus particulièrement selon l'une des revendications 2 - 9, dans lequel, en cas de modification des deuxièmes caractéristiques pendant le déroulement de la première trajectoire et/ou d'une position du robot (230) dans le deuxième environnement de travail pendant le déroulement de la première trajectoire, les étapes de procédé suivantes sont répétées :
mise à jour du modèle de volume de viscosité ;
stimulation du liquide simulé ;
détection de l'élément de liquide ;
détection d'autres chemins parcourus respectivement pour une répétition,
le chemin parcouru et les autres chemins parcourus pour la répétition respective étant regroupés et sauvegardés en tant que deuxième trajectoire.

11. Procédé selon la revendication 10, dans lequel la répétition est répétée selon un intervalle de temps court.

12. Dispositif de commande d'un mouvement du robot d'un robot (230) à l'aide d'une deuxième trajectoire, comportant :
un premier module de calcul (310) pour calculer un modèle de volume de viscosité pour la modélisation d'un premier environnement de travail (270) du robot (230),
le modèle de volume de viscosité comprenant des premières zones spatiales (260) avec des premières viscosités différentes ;
les premières zones (260) étant définies à l'aide de premières caractéristiques du robot (230) et du premier environnement de travail (270) ;
un premier module de détermination (320) pour déterminer une première trajectoire pour le robot (230) ;
un premier module de stimulation (330) pour stimuler un liquide simulé dans le modèle de volume de viscosité pour déplacement le long de la première trajectoire, le liquide stimulé présentant un courant ;
un premier module de détection (340) pour détecter un élément de liquide dans le liquide stimulé à un début de la première trajectoire ;
un deuxième module de détection (350) pour détecter un chemin parcouru de l'élément dans le liquide simulé stimulé dans le modèle de volume de viscosité,
un sens du courant du liquide simulé étant déterminé par les premières zones (260) ;
un premier module de sauvegarde (360) pour sauvegarder le chemin parcouru en tant que deuxième trajectoire ;
un premier module de commande (370) pour commander le mouvement du robot à l'aide de la deuxième trajectoire.

13. Dispositif selon la revendication 12, dans lequel le dispositif comprend au moins un autre module pour exécuter le procédé selon l'une des revendications 1 - 11.

14. Produit de programme informatique comportant des instructions de programme pour exécuter le procédé selon l'une des revendications 1 - 11.

15. Produit de programme informatique comportant des instructions de programme pour un appareil de création qui est configuré au moyen des instructions de programme pour créer le dispositif selon la revendication 12 ou 13.
